# EUROPEAN PATENT SPECIFICATION

(11) **EP 3 759 702 B1**
(45) Date of publication and mention of the grant of the patent: **06.05.2026**
(21) Application number: 19710533.1
(22) Date of filing: 24.02.2019
(51) Int. Cl.: G09B 1/00

(54) **BEAD-ON-TILE APPARATUS AND METHODS**
WULST-AUF-KACHEL-VORRICHTUNG UND VERFAHREN
SYSTÈME ET PROCÉDÉS BEAD-ON-TILE

(30) Priority: 27.02.2018 US 201815906374
(43) Date of publication of application: 06.01.2021
(73) Proprietor: Rankine, Anthony, John, Hickory NC 28601 (US)
(72) Inventor: Rankine, Anthony, John, Hickory NC 28601 (US)
(74) Representative: AWA Denmark A/S
(86) International application number: PCT/US2019/019329
(87) International publication number: WO 2019/168769

(56) References cited:
- EP-B1- 2 398 566
- CN-U- 204 740 770
- FR-A1- 2 892 946
- GB-A- 2 311 404
- US-A- 4 334 869
- US-A- 5 520 541
- US-A- 818 582
- US-B1- 8 529 266

## Description

### Field of the Invention

The present invention relates to apparatus and methods designed to provide children grounding, insights, and self-directed instruction in mathematics and the quantifiable sciences.

### Background of the Invention and Related Art

Subitization is about the power of three. Every animal is innately equipped to make three field of view distinctions, namely right, center and left. The present invention taps into this power to subitize. Additionally, in humans there are vertical strata, namely, ground level, eye level and overhead. This overall creates a three-by-three zoned matrix totaling nine zones of alertness. Hence, radix-10 numericity is a natural fit for super-subitized perception in humans. Fingers and finger counting is irrelevant.

Using modular components, the present invention has broad scope of application to all quantifiable science. However, radix-10 mathematics will be the focus of this disclosure because radix-10 mathematics is the first quantitative science children experience. As long as the invention taps into their subitization arsenal, children are innately equipped to auto-acquire the principles behind mathematics and other quantifiable sciences. The apparatus, on which they play and learn, must reinforce correctness and minimize the potential for goof-ups and self-doubt.

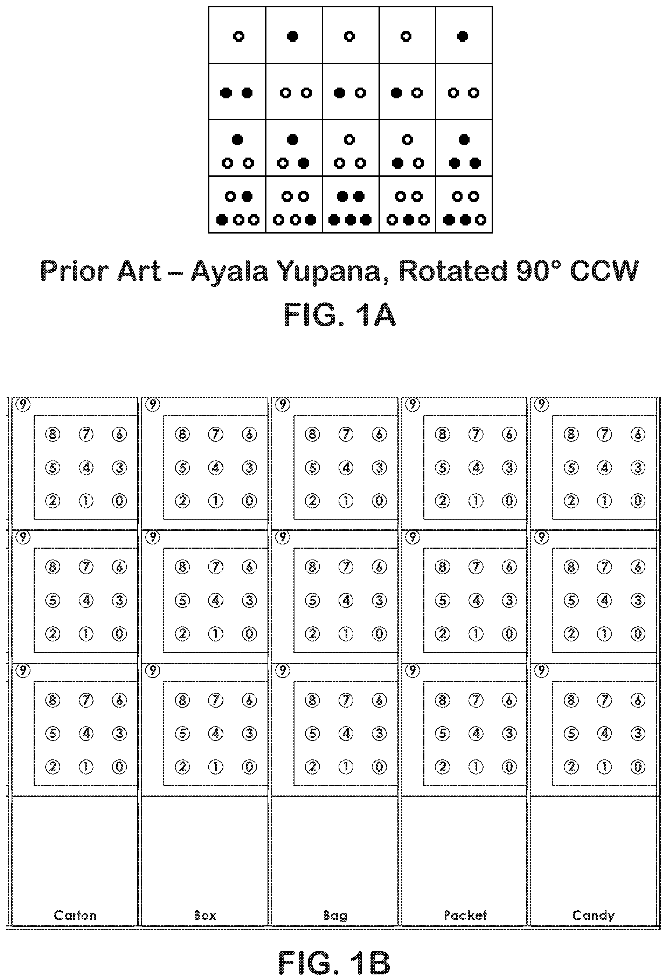

Apparatus according to the invention, such as depicted in Fig. 1B in one of its many adaptable multi-register forms, in this case a three row/register, five rank, one tray setup, has no prior art. The closest facsimile, merely in terms of possessing a planar layout, was postulated from a hand sketch in the archives of the Royal Danish Library in 1908. Within a solitary, hand-written manuscript dating to 1615 titled "El Primera Nueva Coronica y Buen Gobierno" by its author, Felipe Guaman Poma de Ayala, is a sketch of what modern historians call the Ayala Yupana, an Incan abacus. Ayala's hand sketch is reproduced in Fig. 1A, rotated 90° counterclockwise. No other sketch like it exists and no physical embodiment of it has ever been unearthed. Nor does anyone know what tokens were used on the Ayala Yupana. Despite the fact that it is naturally designed for a radix-12 number system, several western-centric radix-10 numerical models have been force-fit so the Ayala Yupana functions as a planar, single register, radix-10 abacus. In 2001, Nicolino de Pasquale proposed a radix-40 model.

### Summary of the Invention

The invention and preferred embodiments are defined in the appended claims. In one aspect of the invention, the preferred instruction site for radix-10 numeric state representations is a compact, super-subitized, square tile, on which instruction pieces are moved into instruction locations on an instruction board. In exemplary embodiments, the instruction site is referred to as a "Digit-Square," the instruction pieces are referred to as "beads," the instruction locations are referred to as "bead sites" and the instruction board is referred to as a "Candy Board." Sculpted into the design of the tile is a subitize-informed bead site layout that breathes life into the super-subitization perceptiveness capability of the human brain. A tenth bead site, representing a saturation state, comparable to all ten fingers outstretched, is located in the top left corner of each Digit-Square.

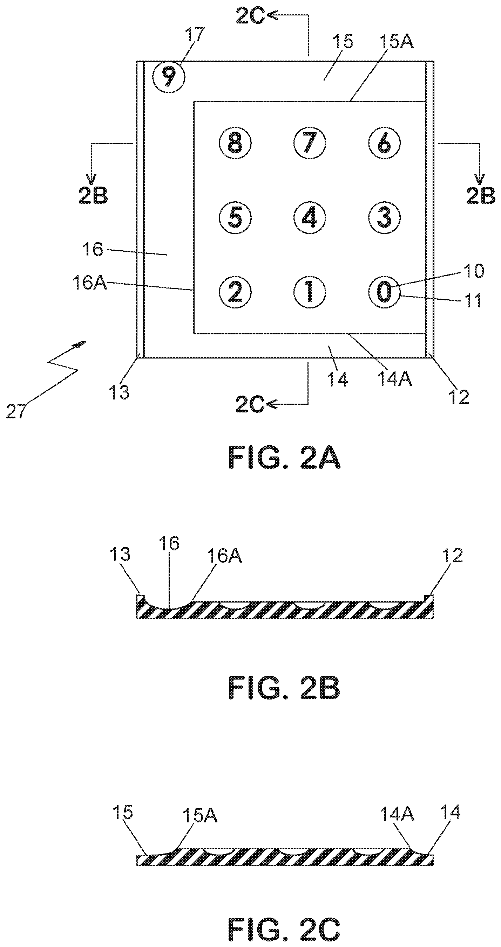

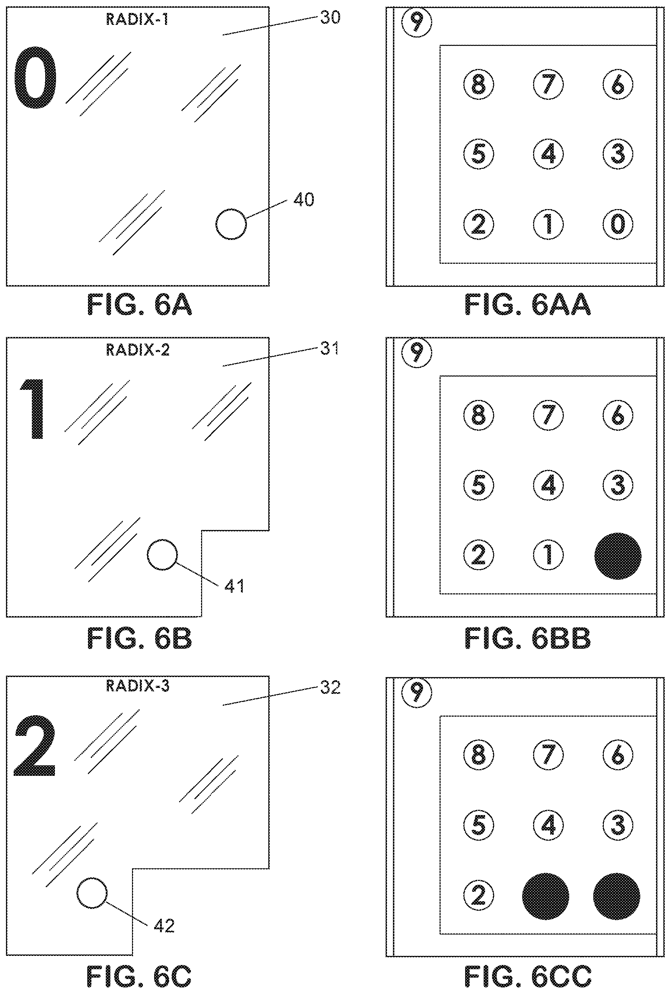

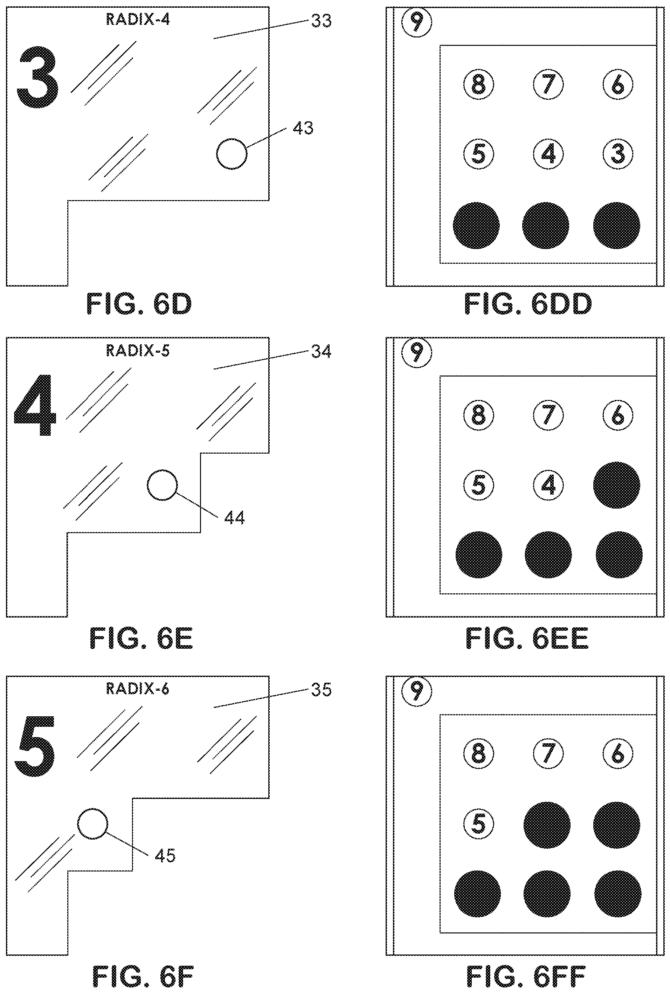

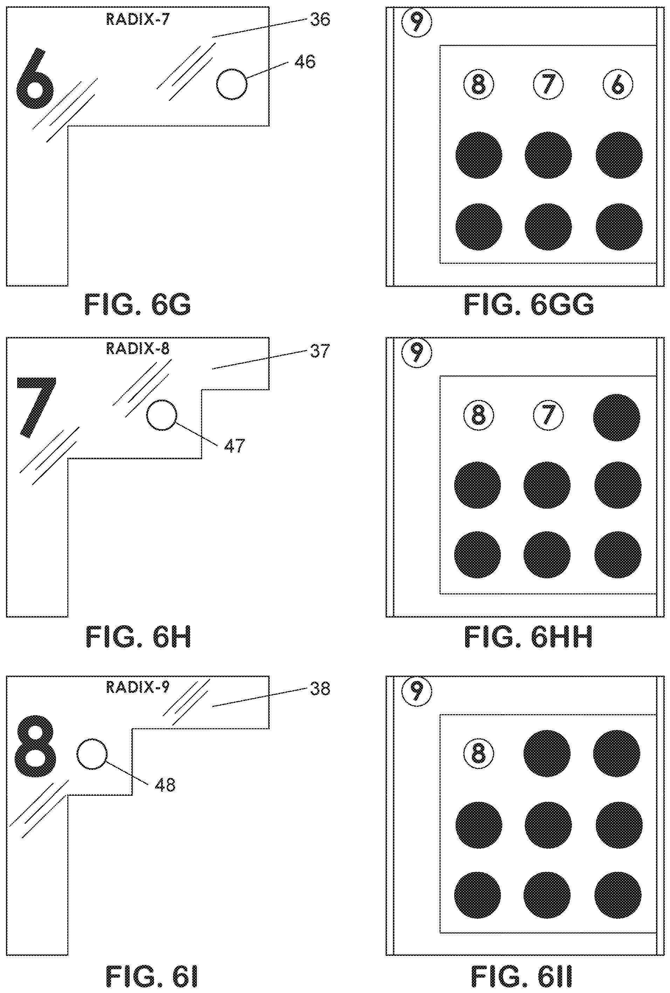

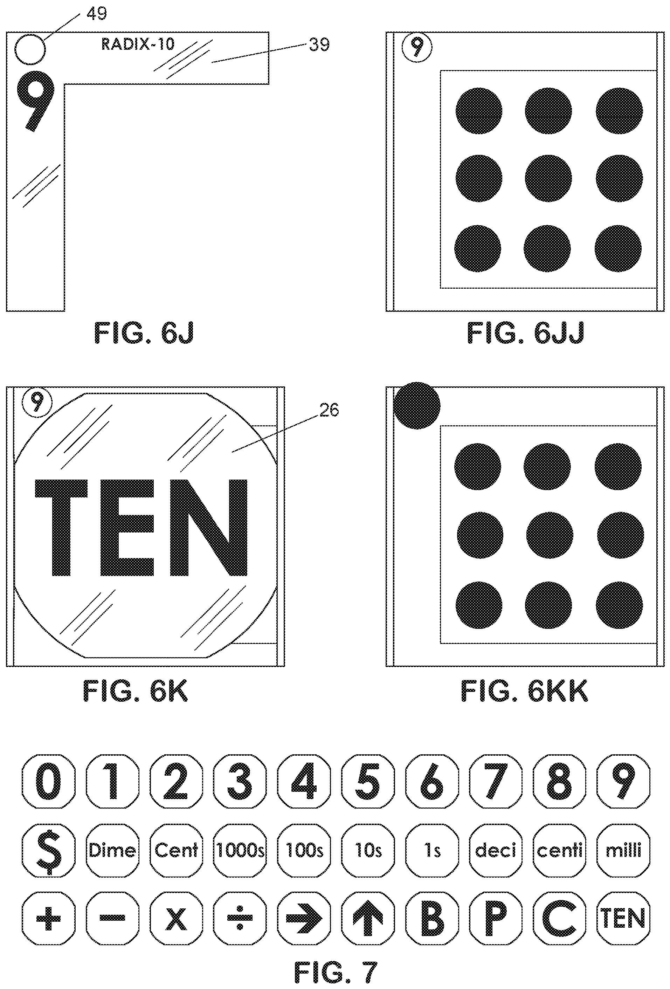

Preferably, the appropriate cultural and language glyph is printed within the bounds of each bead site and on the tile. For example, the bead site layout of Fig. 2A depicts a right to left magnitude sequence (left is greater) with ascending row/echelons (above is greater), imprinted with conventional Hindu-Arabic digit glyphs, namely "0" through "9". Typographic glyphs act as stepping stones so that, in due course, children self-acquire adult symbol usage. As Figs. 6AA through 6JJ make clear, when beads occupy bead sites on a Digit-Square, the bead count, the bead pattern, and numeric value/state is reinforced by the numeric glyph in the next higher bead site. Fig. 6KK depicts the "TEN" saturation state.

The invention applies the golden rule: without relatability, learning is imposition not acquisition. On the Digit-Square, starting at "0" incrementing to "TEN" involves eleven states and ten changes of state, as depicted in the eleven Figs. 6AA through 6KK. What children see visually are eleven states. What children don't see visually are the ten changes of state because those are mental constructs called counting, i.e. changes of state via incrementing.

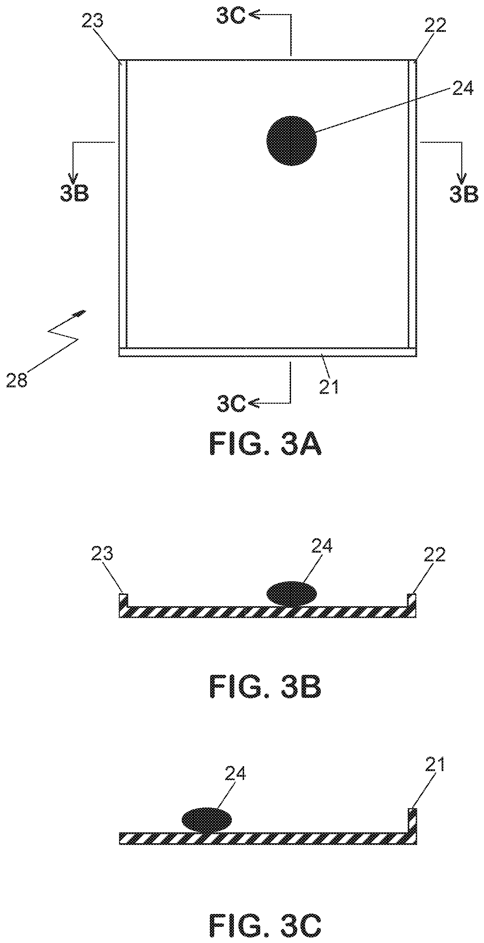

Another form of instruction site is the "Tray" tile. Compatible with the Digit-Square tile, the Tray tile is depicted in Fig. 3A in a plan view and in section views in Fig. 3B and Fig. 3C, also showing the preferred bead. Tray tiles serve as bead repository adjuncts to adjoining Digit-Squares.

One or more tiles, such as Digit-Squares and Trays, may be assembled into a unified tessellation in an embodiment of an instruction board referred to as a "Candy Board" for the parlance of children. Examples are depicted in Fig 2A, being a stand-alone unit tile, and in Fig. 1B, Fig. 4 and Fig. 5, being a unity of plural tiles adhering to a schema of tessellation.

Candy Boards according to the invention can be custom-module assembled from tile and tile composites interconnected through various interlocking mechanisms including bridging tiles and base mats, to create a desired schema of tessellation. Candy Boards can also be single-molded ready-to-play units with a single row, mimicking an abacus, or two-row, three-row and higher order assemblages, with or without built-in Trays. Figs. 1B, 4, 5, 9A and 9B are examples of such problem-focused layouts.

Bead sites, preferably bearing printed indicia, are preferably recessed into the tile substrate to create a cavity-mating profile with beads, namely instruction pieces. While all bead sites, such as depicted in Fig. 2A and shown in section in Figs. 2B and 2C, are preferably circular-dimple in form to be compatible with candy beads such as M&Ms, they can take any predetermined form.

Choking hazards should be avoided at all costs. Because candy is cheap, there is no reason not to use edible beads. Conforming to the dimensions of M&Ms, Skittles and Smarties, the preferred beads are generally round, elliptical or ovulate, finger-friendly candy.

As depicted in the Digit-Square of Fig. 2A, two horizontal channels and one vertical channel provide bead sliding pathways because sliding is preferred over placement. These channels frame three edges that surround and thus define a bead site plateau region. For other science modeling, such as the electron shells of an atom, channels and plateau regions may number more than one.

Preferably, the Digit-Square is hemmed in by a right bead-control fence and a left bead-control fence. Such fencing aims to enforce tile grouping, such as the rank system, i.e. numeric order of magnitude. Similar to and compatible with a Digit-Square's enforcement of tile grouping, each Tray has three fences to confine beads to a given rank. One primary objective of the method of plosive-state equilibration is to straddle or to hurdle fencing that divides the Candy Board into ranks or groups.

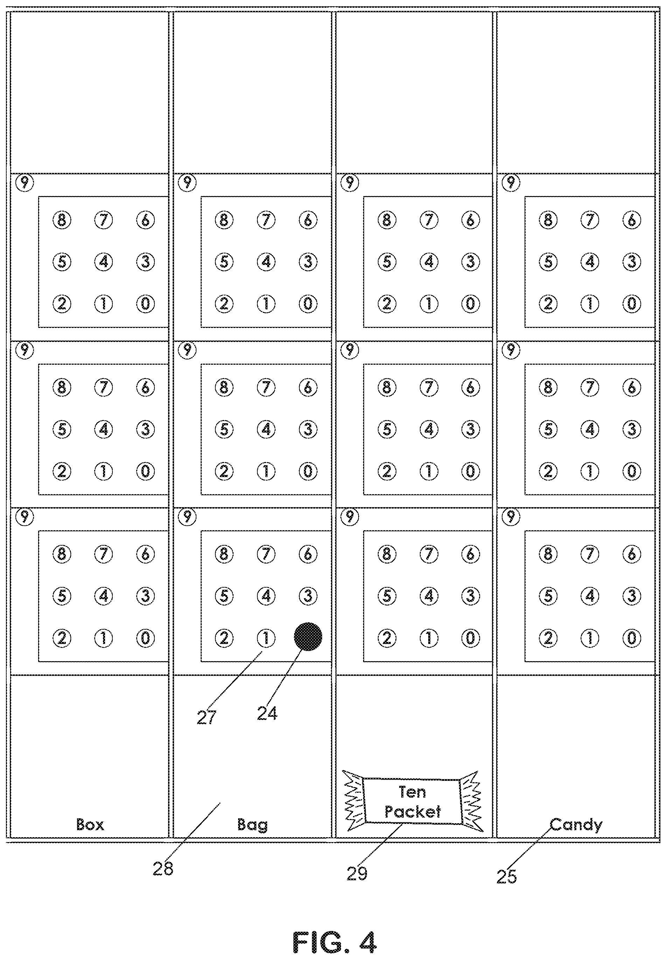

Mathematical order of magnitude conventions map directly to the Candy Board's Digit-Square ranking system. For example, in Fig. 4 depicting a three-row, four rank Candy Board, a decal marks the Candy rank. All higher ranks tessellate leftward, such as the Packet rank, depicted in Fig. 4 using an alternative clipart decal, and so on. Mimicking the real world, ranks of candy containment use child-friendly names and images, such as Packets, Bags, Boxes and so on.

Preferably, each Digit-Square of the same rank is colored and color consistent. Hence, a full-scale Candy Board appears as a series of vertical strips in a light-shade of color that correlate with a set of rank-specific beads in a darker-shade of similar color.

Preferably, Trays use color to delineate rank that is compatible with the color used by Digit-Squares of the same rank. Preferably, label decals or clipart decals denote the rank to which the Tray pertains. As depicted in Fig. 4, for example, one or more Tray tiles act as bead repositories in conjunction with one or more Digit-Square tiles when setup in a given singular tessellation embodiment. Other such embodiments are depicted in Fig. 1B, Fig. 5, Fig. 9A and Fig. 9B.

Physical bead movement on structured, rule-enforcing terrain, such as rows and ranks, fences, channels and bead site stamped with a location or number, can be threaded into a storyline and expressed unambiguously via navigation directions. Consequently, storytelling on a physical Candy Board can be a means for demonstrating concepts that are not easily explained. In essence, beads are like pretend cars that drive back and forth between homes, namely bead sites, and color-coordinated parking lots, namely Trays.

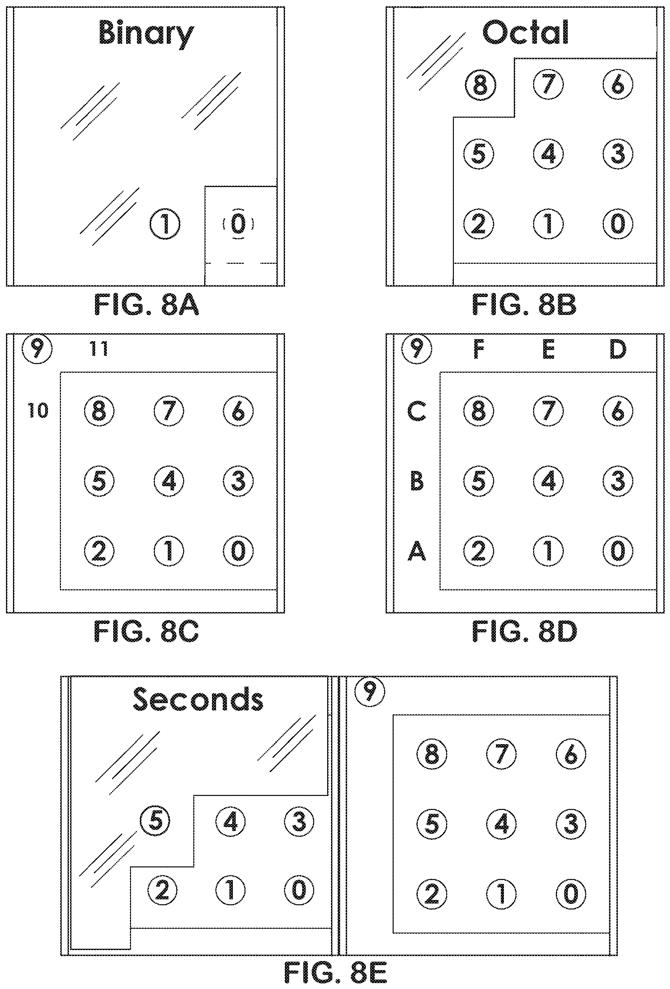

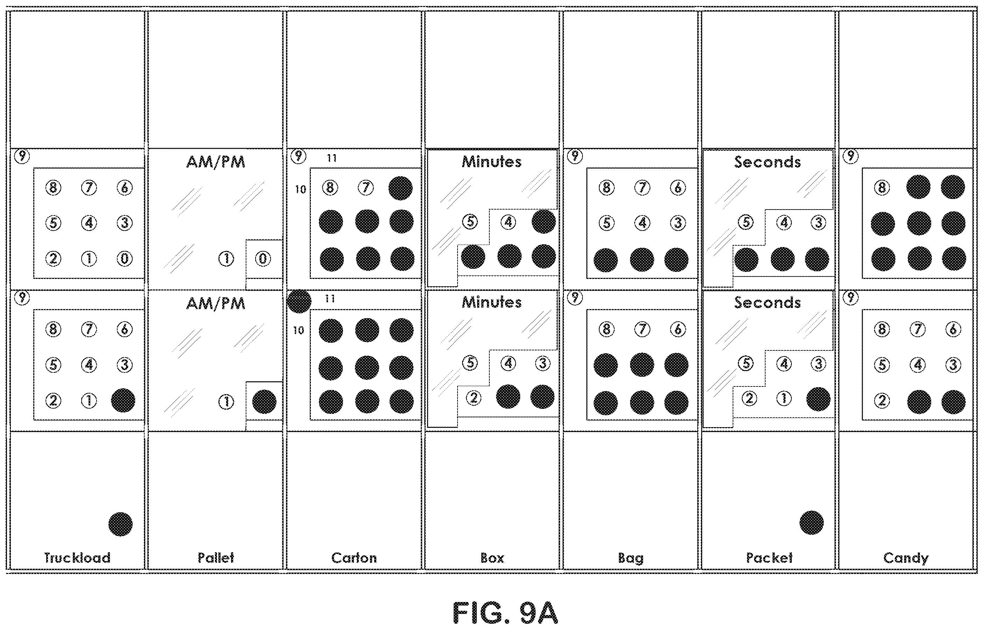

Figs. 6A through 6J along the left-hand margin of the drawings depict stencils optionally bearing indicia, and with optional cutouts. When placed over a Digit-Square, stencils are the preferred means for enforcing the setup of the correct stencil-specific bead count and bead pattern. Cutouts permit the underlying glyph printed in the predetermined bead site on the Digit-Square to show through. This reinforces bead pattern to numeric symbol association. Cutouts can also function as plosive-state bead sites. This emulates radix choking, where the radix of a Digit-Square is reduced, as illustrated in Figs. 8A, 8B and 8E, and as applied to the clock tessellation of Fig. 9A.

Preferably, indicia bearing chips, as depicted in Fig. 6K and Fig. 7 as a set, act as substitutes for beads laid on the Digit-Square. Chips are the primary means for weaning a child away from bead patterns. Chips are also one means for manifesting algebraic substitution on the Candy Board.

In another Digit-Square customization, using decals if desired, Fig. 8D depicts how a kludge on the radix-10 Digit-Square can emulate radixes up to hexadecimal, i.e. ounces, and for radix-12, i.e. inches or hours, as depicted in Fig. 8C.

Although game-play on a physical Candy Board is preferred, especially during a child's earliest learning phases, computer-proctored display devices designed around the layout and techniques of a physical Candy Board provide greater flexibility for dynamically animating storylines in more sophisticated games, or where detection and correction of erroneous game-play is paramount.

Be it stand-alone intelligent Digit-Squares, computer connected Digit-Squares, or display device Digit-Square analogues, in a computer-proctored embodiment of the apparatus, storylines are preferably presented as text, audio or video, or any combination thereof. Be it localized to a school or distributed via the Internet, a computer-networked embodiment enables an instructor to walk students through a generic problem, but one where each student has a unique instance of the problem on his personal display device to resolve.

Computer-proctored embodiments are well suited to rigorously enforcing the storyline and the rules of the problem at hand. For example, the computer-proctored device can flag an instructor to intercede, or can handle simple matters on its own. For example, enforcing the order in which bead/icons are placed so the child adheres to "0" followed by "1," followed by "2" and followed by "3", rather than "2", "1", "0" and "3," or any other haphazard bead sequence and placement.

The computer-proctored embodiment provides enhanced scope for personalized interaction. For example, whenever the child correctly moves a Packet-Rank colored bead/icon to cover-up the "2" bead site in the Packet-Rank on the row of Digit-Squares representing the inventory of candy in some storyline pantry, this change of state triggers the computer-proctored display and voice system to respond, "The new packet added makes three packets of candy in the pantry."

All other modes of exposition parallel to the tangible and digital game board models and their co-related methods are also contemplated when future technology devises and implements new interaction devices. Such interaction devices include virtual reality 3D configurations, tangible 3D configurations and directly mapping real fingers and finger patterns to virtual digit configurations, along with co-related gestures and words animating the methods by which a game scenario is played out.

### Brief Description of the Drawing Figures

Fig. 1A is a sketch of a single-row, five order of magnitude Ayala Yupana that is presumed to be prior art of ancient Inca.
Fig. 1B depicts a three-row, five order of magnitude Candy Board.
Figs. 2A, 2B, 2C depict a radix-10 Digit-Square in plan and elevation views, wherein tessellation interconnects are not shown for purposes of clarity.
Figs. 3A, 3B, 3C depict a Tray with one bead in plan and elevation views, wherein tessellation interconnects are not shown for purposes of clarity.
Fig. 4 depicts a Candy Board having three rows of Digit-Squares, with top and bottom Trays.
Fig. 5 depicts a Candy Board having two rows of Digit-Squares, with top and bottom Trays.
Figs. 6A to 6K and 6AA to 6KK illustrate ten stencils and a TEN chip along the left margin with their bead pattern counterparts along the right margin.
Fig. 7 illustrates examples of typographic symbols on a typical set of chips.
Figs. 8A to 8E illustrate modification means for radix 2, 8, 12, 16 and 60 arithmetic.
Figs. 9A and 9B illustrate mixed-radix day:hour and min:sec clock tessellation on the Candy Board in a worked example.
Figs. 10A to 10D illustrate plosive-state equilibration normalizing plosive-state TENs into canonical form in a worked example.
Fig. 11 is a sample table of the 632M method expressed in pencil-on-paper form showing symmetry and simplicity.

### Detailed Description of Exemplary Embodiments of the Invention

Fig. 1B depicts an exemplary embodiment of a three-row five order of magnitude Candy Board according to the present invention. The Candy Board comprises a plurality of Digit-Squares **27** and Trays **28.** A typical Digit-Square **27** is depicted in a plan view in Fig. 2A and in section views in Fig. 2B and Fig 2C taken along the lines indicated in Fig. 2A. Each Digit-Square **27** has a plurality of bead sites **11, 17** and an appropriate glyph **10** is imprinted within each bead site **11, 17** on the tile. Each Digit-Square **27** further has a right bead-control fence **12,** a left bead-control fence **13,** a first horizontal channel **14,** a second horizontal channel **15** and a vertical channel **16.** The channels **14, 15, 16** frame three corresponding edges **14A, 15A, 16A** that define a bead site plateau region of the Digit Square **27.** A typical Tray **28** is depicted in a plan view in Fig. 3A and in section views in Fig. 3B and Fig 3C taken along the lines indicated in Fig. 3A. Each Tray **28** has three fences **21, 22, 23** that enclose the Tray on three sides to confine instruction pieces **24** to a given rank on the Candy Board. The instruction pieces **24** are also referred to herein as "beads" and may comprise relatively small, round, ovulate, finger-friendly edible candy, such as M&Ms, Skittles or the like.

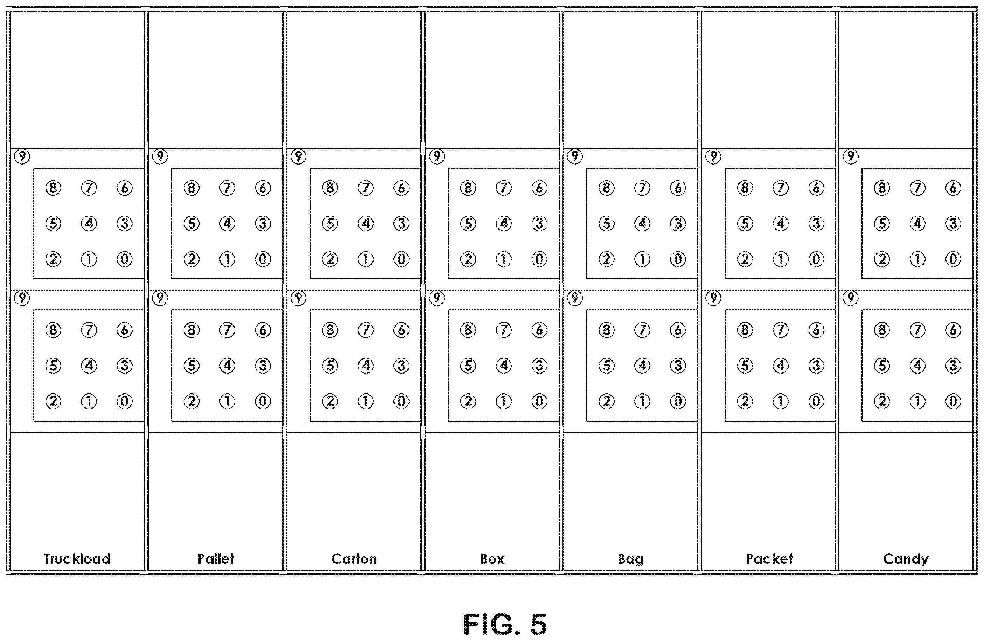

Fig. 4 depicts another exemplary embodiment of a Candy Board according to the present invention having three rows of Digit-Squares **27,** with top and bottom Trays **28.** The three-row four rank Candy Board depicted in Fig. 4 has an alphanumeric decal **25** indicating the "Candy" rank and an alternative clipart decal **29** indicating the higher "Packet" rank that tessellates leftward from the Candy rank. Fig. 5 depicts another exemplary embodiment of a Candy Board according to the present invention having two rows of Digit-Squares **27,** as depicted in Fig. 2A, with top and bottom Trays **28,** as depicted in Fig. 3A.

Figs. 6A to 6J illustrate stencils **30-39** that may be provided with optional printed indicia and/or optional openings or cutouts **40-49.** The bead-pattern counterparts to the stencils **30-39** are illustrated in the corresponding Figs. 6AA to 6JJ. When placed over a Digit-Square **27,** the stencils **30-39** are the preferred means for enforcing the setup of the correct stencil-specific bead count and bead-pattern counterpart. The cutouts **40-49** permit the underlying glyph **10** printed in the corresponding bead site on the Digit-Square **27** to be visible through the stencil, which reinforces bead pattern to numeric symbol association. The cutouts **40-49** may also function as plosive-state bead sites.

Fig. 6K and Fig. 7 illustrate that one or more indicia bearing chips **26** as a set may act as substitutes for beads laid on a Digit-Square **27.** In one embodiment, chips **26** may serve as the primary means for weaning a child away from bead patterns. In another embodiment, chips **26** may serve as one means for manifesting algebraic substitution on the Candy Board.

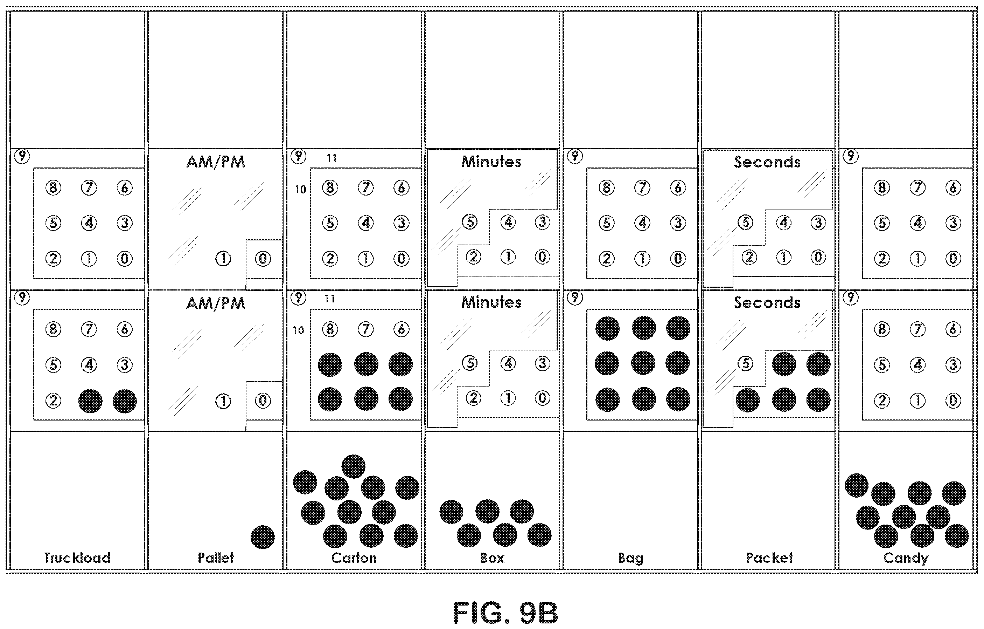

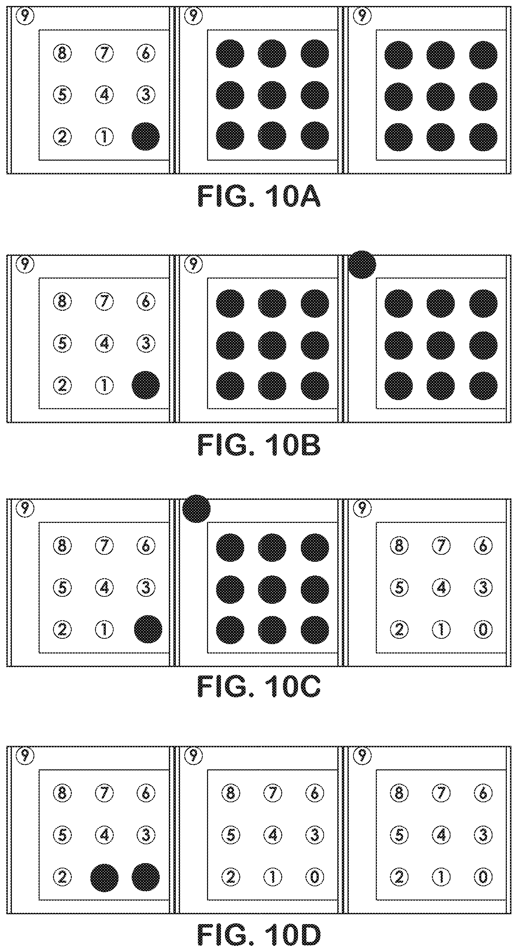

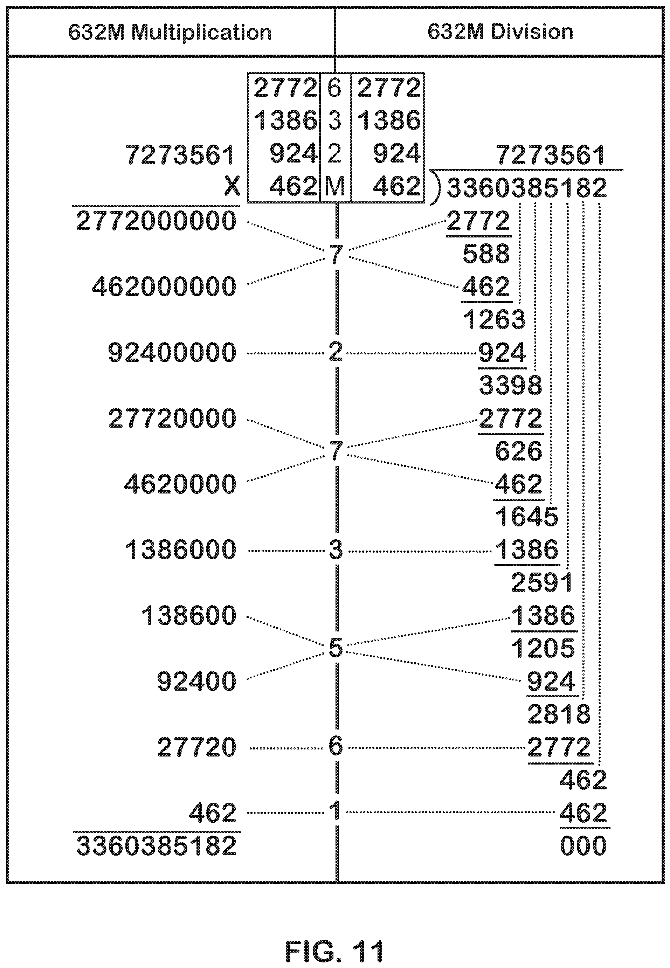

Figs. 8A to 8E illustrate another exemplary embodiment of the invention including modification means for radix 2, 8, 12, 16 and 60 arithmetic. Figs. 9A and 9B illustrate another embodiment of the invention including mixed-radix day:hour and min:sec clock tessellation on the Candy Board in a worked example. Figs. 10A to 10D illustrate another embodiment of the invention including plosive-state equilibration normalizing plosive-state TENs into canonical form in a worked example. Fig. 11 illustrates yet another exemplary embodiment of the invention in a sample table of the 632M method expressed in pencil-on-paper form showing symmetry and simplicity.

Because modeling and game play on the apparatus is straightforward to anyone knowledgeable in the art, the two essential methods that completely cover the use of the apparatus for doing Addition, Subtraction, Multiplication and Division will provide details on use of the apparatus.

### Example 1: The Method of Plosive-State Equilibration

Plosive-state equilibration is how the Candy Board emulates the pencil-on-paper methods called "Carry" and "Borrow." Plosive-state equilibration is the preferred method for one tile group/rank to interact with another tile group/rank. On the Digit-Square **27,** a plosive-state lock up occurs when beads occupy every allowable bead site. As depicted in Fig. 2A, the "9" bead site **17** is preferably located on the Digit-Square **27** at the junction of the horizontal channel **15** and the vertical channel **16.** Once a bead occupies this bead site during the operation of "Addition," namely the amalgamating of two values on two rows on a Candy Board, it physically blockades further bead-in-channel sliding onto the Digit-Square **27.** This physical lock-up manifests what is called a plosive-state TEN, i.e. the bead count and bead pattern depicted in Fig. 6KK.

More generally described, the method of plosive-state equilibration is triggered whenever a plosive-state bead condition arises on a tile during an operation in progress. Preferred tile designs employ a bead site layout that causes a physical lock-up that arrests further bead play. In order for the operation to proceed further, the method of plosive-state equilibration must resolve the lock-up. Thereafter the operation in progress may resume. Otherwise the operation in progress must abort and perform a related exception state process.

A cogently designed bead-on-tile model is admirably suited for handling many seemingly complex problems. For example, mixed-radix systems such as days, hours, minutes, and seconds, can be represented and operated on to solve a complex problem. As depicted in Fig. 9A, dual Digit-Squares are used for seconds and minutes. The hours are split into two one-dozen intervals, one for "AM" and one for "PM". The first rank of the hours uses the radix-12 Digit-Square kludge as depicted in Fig. 8C. The AM/PM rank uses a radix-2, binary stencil adapted from the basic form of Fig. 8A. Days are radix-10. Figs. 9A and 9B illustrate how the Candy Board handles mixed-radix arithmetic when 7 hours, 43 minutes and 38 seconds is added to 1 day, 10 pm, 26 minutes and 12 seconds.

Rigor makes for relatability. In the clock tessellation, a dual Digit-Square subassembly emulates radix-60 via a specialized stencil. Fig. 8E depicts the use of a "Seconds" stencil in which a cutout set in the "5" location when placed atop a Digit-Square allows the "5" glyph to show through. For example, with five beads on the left Digit-Square and nine on the right, a typographic value "59" is displayed. Add 1 second to "59" and plosive-state TEN lock-up occurs, i.e. "5TEN". Plosive-state equilibration of TEN causes a sixth bead to socket atop the plosive-state "5" cutout on the stencil, which occludes the "5" glyph printed on the tile bead site, i.e. a second plosive-state lock-up has occurred. Under the rule of rippling, after a second plosive-state equilibration takes place the Candy Board becomes "100", namely, 1 minute, 00 seconds in canonical form. Rippling is demonstrated in Figs. 10A through 10D where "199" plus 1 ripples via plosive-state equilibration into the canonical form "200". This might seem tedious overkill, but the apparatus enforces rigor in order to provide a child the visual and tactile means to walk through and demystify quantitative processes step by step.

During the operation of "Subtraction," the initial setup on a two Digit-Square row Candy Board sites the Subtrahend on the bottom Digit-Square row and the Minuend on the top Digit-Square row. The goal is to completely zero-out the Minuend. Subtraction is the game where a child slides beads from top and bottom Digit-Square rows simultaneously, placing them in the adjacent top and bottom Trays. A "Borrow" lock-up condition arises when the subtrahend in the focus rank runs down to zero beads, but beads still remain in the minuend. In this event, plosive-state equilibration under subtraction, dictates that a bead in the next higher rank of the subtrahend is slid into the Tray, and ten beads in the focus subtrahend rank are slid from the Tray to saturate every bead site in the focus Digit-Square of the subtrahend, forming the TEN bead pattern of Fig 6KK. The method is equivalent to breaking a one dollar bill into ten dimes. With the lock-up resolved, the child resumes simultaneous bead sliding from both minuend and subtrahend Digit-Squares until the minuend is zeroed-out. This process applies generally. Consider the mixed-radix clock problem for subtraction. Starting with the layout of Fig 9B, the child places 7 hours, 43 minutes and 38 seconds in the top Digit-Square row, namely the minuend, as depicted in the top Digit-Square row of Fig. 9A. After subtraction concludes the subtrahend is 1 day, 10 pm, 26 minutes and 12 seconds, as depicted in the bottom Digit-Square row of Fig. 9A, and the top Digit-Square row is now zeroed-out completely, as depicted in the top Digit-Square row of Fig. 9B.

Plosive-state equilibration is also the means for exploded value representations to normalize into canonical representations and visa-versa. For example, on the Candy Board during addition, a candy packaging operation converts plosive-state TEN Candies into 1 Packet, 0 Candies, namely "10" in the canonical form adults speak aloud as "ten." Figs. 10B through 10D depict "19TEN" resolving to "1TEN0" resolving to the canonical written form "200."

### Example 2: The Method of 632M on the Candy Board

Super-subitization breaks the Digit-Square states "0" through "9" into two components. The "Spine" components 6, 3, 0, (vertical axis) and the "Rib" components 2, 1, 0 (horizontal axis), except that "9" is 6+3. This formulation creates a bi-level tree representing every digit. The Spine+Rib approach gives rise to the 632M-Table which handily slays the so-called complex operations of multiplication and division, as illustrated via pencil-on-paper form in Fig. 11.

The M in 632M denotes the baseline multiplicand or the divisor value relevant to the problem, also called 1M M-value associated with the 1S S-value. The "632" designates three other S-values, namely 6S, 3S and 2S, being the additional multiples of 1M, calculated via three addition operations.

The method of 632M multiplication and quotient auto-generation enables children to do multiplication and division without multiplication tables, without the need for memorizing them, without doing single digit multiplication in their heads, and without guess-estimating a candidate quotient digit, rather the quotient is auto-generated as 632M division unfolds. The method requires 1.4 additions or subtractions for each multiplier or quotient digit on average.

The 632M-Table, manifested in the form of a Candy Board, called the 632M-Board, comprises a column for four S-values with an adjoining column for the four M-Values, where the column is one rank higher than the 1M value, so the highest possible 6M value is accommodated. Illustrating a pencil-on-paper breakdown of the 632M method, Fig. 11 highlights the symmetry inherent to multiplication and division when dissected through the lens of super-subitization. With an M value of 462, the 632M-Table appears as dual, side by side 632M tables in the top/center of Fig. 11. The S-values appearing in the center vertical column 6, 3, 2, 1 (or M), denote multiples of the baseline multiplicand or the divisor values, as the case may be. S-values are used in an automated version of the cascade process, called While-loop Cascading, whereby the 632M method and the 632M-Table can be generalized for operations in radix systems other than radix-10.

Furthermore, the method of 632M is open to obvious optimization, such as a fall through execution tree requiring at most two M-value operations. Certain digits repeated in a multiplier may give a better M-value selection, such as 532M, for example, whenever 5's outnumber 6's by two to one and 9's are scarce. Similarly, for 742M and 732M, which have an overhead of four additions to setup the M-Table, but otherwise super-subitize over radix-10 as well as 632M does, and are optimal for radix-11, as well. Similar extensions of the method apply to other radixes. For example, using a nine M-value 50/40/30/20/10/632M-Table with its setup overhead of nine additions, radix-60 arithmetic requires no more than 3 operations per step.

The setup of a four row 632M-Board executes as follows: Step (A): Setup a series of S-values from top to bottom rows, namely 6, 3, 2, 1 in the S-value field of the 632M-Board. Step (B): Setup the 1M value on both the bottom, next row up and top row (S = 1, 2, 6 rows). Step (C): Add the bottom row into the next row up, which yields 2M in the S=2 row. Step (D): Duplicate the 2M value into the row above it (S=3 row). Step (E): Add the topmost row (S=6) downwards into the row beneath, which yields 3M in the S=3 row. Step (F): Duplicate the 3M value into the topmost row and the bottom row (S=1 and 6 rows). Step (G): Add the bottom row into the topmost row, which yields 6M in the topmost row. As an alternative, double the topmost row in-situ, which makes needless the Step (F) process of duplicating 3M into the bottom row. Step (H): Finally, setup the 1M value in the bottom row (S=1).

A 632M-Board detached from the Candy Board facilitates both rank shifting and duplication of M-value presets onto the Candy Board in the partial product row during multiplication and the divisor/subtrahend row during division. A child merely needs to replicate the add-shift process for multiplication or the subtract-shift process for division, as illustrated in Fig 11, using the 632M-Board as the template for setting up values on the Candy Board.

## Claims

1. An apparatus for providing instruction in at least one of mathematics and quantifiable sciences, the apparatus comprising:
an instruction board formed from a plurality of instruction tiles (27), each of the instruction tiles (27) having predetermined plateau region instruction locations (11) thereon located within an instruction location plateau region framed by edges (14A, 15A, 16A) of two horizontal channels and one vertical channel (14, 15, 16), and a predetermined saturation state instruction location (17) thereon located outside the instruction location plateau region; and
instruction pieces (24) configured to be received on the instruction tiles (27) at the predetermined plateau region instruction locations (11) and the predetermined saturation state instruction location (17).

2. The apparatus of claim 1, wherein the predetermined saturation state instruction location (17) is located at the junction of the upper horizontal channel (15) and the vertical channel (16).

3. The apparatus of claim 1, wherein the predetermined plateau region instruction locations (11) are arranged in a three-by-three zoned matrix.

4. The apparatus of one of the preceding claims, wherein each instruction tile (27) has an edge and wherein edges of adjacent instruction tiles (27) adjoin to form the instruction board.

5. The apparatus of one of the preceding claims, wherein said two horizontal channels (14, 15) and said one vertical channel (16) provide instruction piece sliding pathways.

6. The apparatus of any one of the preceding claims, wherein the predetermined saturation state instruction location (17) is located outside the instruction location plateau region, in the top left corner.

7. The apparatus of any one of the preceding claims, wherein the predetermined plateau region instruction locations (11) and the predetermined saturation state instruction location (17) are recessed into the instruction tile (27).

8. The apparatus of any one of the preceding claims, wherein the predetermined plateau region instruction locations (11) and the predetermined saturation state instruction location (17) are bearing printed indicia (10).

9. The apparatus of any one of the preceding claims, wherein the plurality of instruction tiles (27) are assembled into a unified tessellation.

10. The apparatus of any one of the preceding claims, wherein the plurality of instruction tiles (27) have at least one edge and wherein the edges of adjacent instruction tiles (27) abut one another and are adjoined to form a tessellation that defines the instruction board.

11. The apparatus of any one of the preceding claims, including at least one stencil (30-39) with an optional opening or cutout (40-49), wherein the stencil is a means for enforcing the setup of the correct stencil-specific instruction piece count and instruction piece pattern.

12. The apparatus of any one of the preceding claims, including a plurality of stencils (39-39) wherein each of the stencils has an opening or cutout (40-49) that permits an underlying one of the predetermined plateau region instruction locations (11) or an underlying one of the predetermined saturation state instruction location (17) to be visible through the opening or cutout (40-49) when the stencil (30-39) is positioned on the instruction tile (27).

13. A method for providing instruction in at least one of mathematics and quantifiable sciences, the method comprising:
providing an apparatus according to any one of the preceding claims; and
manipulating the instruction pieces (24) to the predetermined plateau region instruction locations (11) and the predetermined saturation state instruction location (17) in a predetermined order to perform a change of state operation relating to the at least one of mathematics and quantifiable sciences.

14. The method of claim 13, wherein the instruction pieces are placed on the predetermined plateau region instruction locations (11) from left to right and in ascending rows.

15. The method of claim 13 or 14 for performing 632M multiplication or 632M division, wherein M designates a multiplicand or divisor value for the 632M multiplication or 632M division, comprising:
setting up an instruction board, designated 632M-Board, comprising a column of four instruction tiles for S-values, and an adjoining column of four rows of instruction tiles, a rank of the column of the four rows being one higher than the M value, followed by the steps of:
(A) setting up a series of S-values 6, 3, 2, 1 from top to bottom rows in the S-value column of the 632M-Board;
(B) setting up the 1M value in the adjoining column on both the bottom, next row up and top row;
(C) adding the bottom row into the next row up, which yields 2M in the S=2 row;
(D) duplicating the 2M value into the row above it (S=3 row);
(E) adding the topmost row (S=6) downwards into the row beneath, which yields 3M in the S=3 row; and
(F) duplicating the 3M value into the topmost row and the bottom row (S=1 and 6 rows), and
(G) adding the bottom row into the topmost row, which yields 6M in the topmost row; or (F') duplicating the 3M value into the topmost row, and
(G') doubling the topmost row in-situ;
(H) setting up the 1M value in the bottom row (S=1); and
(I) replicating on an instruction board detached from the 632-Board the add-shift process for multiplication or the subtract-shift process for division using the 632M-Board as the template for setting up values on the instruction board.

## Patentansprüche

1. Vorrichtung zum Bereitstellen von Anweisungen in Mathematik und/oder quantifizierbaren Wissenschaften, wobei die Vorrichtung Folgendes umfasst:
eine Anweisungstafel, die aus mehreren Anweisungskacheln (27) gebildet ist, wobei jede der Anweisungskacheln (27) vorbestimmte Plateaugebietsanweisungsorte (11) darauf aufweist, die innerhalb eines Anweisungsortplateaugebiets angeordnet sind, das von Rändern (14A, 15A, 16A) zweier horizontaler Kanäle und eines vertikalen Kanals (14, 15, 16) gerahmt wird, und einen vorbestimmten Sättigungszustandsanweisungsort (17) darauf aufweist, der außerhalb des Anweisungsstandortplateaugebiets angeordnet ist; und
Anweisungsstücke (24), die dazu konfiguriert sind, auf den Anweisungskacheln (27) an den vorbestimmten Plateaugebietsanweisungsorten (11) und dem vorbestimmten Sättigungszustandsanweisungsort (17) empfangen zu werden.

2. Vorrichtung nach Anspruch 1, wobei der vorbestimmte Sättigungszustandsanweisungsort (17) an der Verbindungsstelle des oberen horizontalen Kanals (15) und des vertikalen Kanals (16) angeordnet ist.

3. Vorrichtung nach Anspruch 1, wobei die vorbestimmten Plateaugebietsanweisungsorte (11) in einer drei-mal-drei Zonenmatrix angeordnet sind.

4. Vorrichtung nach einem der vorhergehenden Ansprüche, wobei jede Anweisungskachel (27) einen Rand aufweist und wobei Ränder benachbarter Anweisungskacheln (27) aneinander angrenzen, um die Anweisungstafel zu bilden.

5. Vorrichtung nach einem der vorhergehenden Ansprüche, wobei die zwei horizontalen Kanäle (14, 15) und der eine vertikale Kanal (16) Anweisungsstückgleitpfade bereitstellen.

6. Vorrichtung nach einem der vorhergehenden Ansprüche, wobei der vorbestimmte Sättigungszustandsanweisungsort (17) außerhalb des Anweisungsortplateaugebiets in der oberen linken Ecke angeordnet ist.

7. Vorrichtung nach einem der vorhergehenden Ansprüche, wobei die vorbestimmten Plateaugebietsanweisungsorte (11) und der vorbestimmte Sättigungszustandsanweisungsort (17) in die Anweisungskachel (27) vertieft sind.

8. Vorrichtung nach einem der vorhergehenden Ansprüche, wobei die vorbestimmten Plateaugebietsanweisungsorte (11) und der vorbestimmte Sättigungszustandsanweisungsort (17) gedruckte Zeichen (10) tragen.

9. Vorrichtung nach einem der vorhergehenden Ansprüche, wobei die mehreren Anweisungskacheln (27) zu einer vereinheitlichten Tessellation zusammengesetzt sind.

10. Vorrichtung nach einem der vorhergehenden Ansprüche, wobei die mehreren Anweisungskacheln (27) mindestens einen Rand aufweisen und wobei die Ränder benachbarter Anweisungskacheln (27) aneinander anliegen und aneinander angrenzen, um eine Tessellation zu bilden, die die Anweisungstafel definiert.

11. Vorrichtung nach einem der vorhergehenden Ansprüche, die mindestens eine Schablone (30-39) mit einer optionalen Öffnung oder Aussparung (40-49) beinhaltet, wobei die Schablone ein Mittel zum Durchsetzen der Einrichtung der korrekten schablonenspezifischen Anweisungsstückanzahl und des Anweisungsstückmusters ist.

12. Vorrichtung nach einem der vorhergehenden Ansprüche, die mehrere Schablonen (39-39) beinhaltet, wobei jede der Schablonen eine Öffnung oder eine Aussparung (40-49) aufweist, die es ermöglicht, dass ein unterliegender der vorbestimmten Plateaugebietsanweisungsorte (11) oder ein unterliegender des vorbestimmten Sättigungszustandsanweisungsorts (17) durch die Öffnung oder die Aussparung (40-49) sichtbar ist, wenn die Schablone (30-39) auf der Anweisungskachel (27) angeordnet ist.

13. Verfahren zum Bereitstellen von Anweisungen in Mathematik und/oder quantifizierbaren Wissenschaften, wobei das Verfahren Folgendes umfasst:
Bereitstellen einer Vorrichtung nach einem der vorhergehenden Ansprüche; und
Manipulieren der Anweisungsstücke (24) an die vorbestimmten Plateaugebietsanweisungsorte (11) und den vorbestimmten Sättigungszustandsanweisungsort (17) in einer vorbestimmten Reihenfolge, um eine Änderung einer Zustandsoperation in Bezug auf die Mathematik und/oder die quantifizierbaren Wissenschaften durchzuführen.

14. Verfahren nach Anspruch 13, wobei die Anweisungsstücke von links nach rechts und in aufsteigenden Zeilen auf den vorbestimmten Plateaugebietsanweisungsorten (11) angeordnet werden.

15. Verfahren nach Anspruch 13 oder 14 zum Durchführen einer 632M-Multiplikation oder 632M-Division, wobei M einen Multiplikand- oder Divisorwert für die 632M-Multiplikation oder die 632M-Division bezeichnet, Folgendes umfassend:
Einrichten einer Anweisungstafel, die 632M-Tafel bezeichnet wird, die eine Spalte von vier Anweisungskacheln für S-Werte und eine angrenzende Spalte von vier Zeilen von Anweisungskacheln umfasst, wobei ein Rang der Spalte der vier Zeilen um eins höher als der M-Wert ist, gefolgt von den folgenden Schritten:
(A) Einrichten einer Reihe von S-Werten 6, 3, 2, 1 von oben nach unten in der Spalte von S-Werten der 632M-Tafel;
(B) Einrichten des 1M-Werts in der angrenzenden Spalte sowohl in der untersten, in der nächsten Zeile nach oben als auch in der obersten Zeile;
(C) Addieren der untersten Zeile in die nächste Zeile nach oben, was 2M in der Zeile S = 2 ergibt;
(D) Duplizieren des 2M-Werts in die darüberliegende Zeile (Zeile S = 3);
(E) Addieren der obersten Zeile (S = 6) nach unten in die darunterliegende Zeile, was 3M in der Zeile S = 3 ergibt; und
(F) Duplizieren des 3M-Werts in die oberste Zeile und die unterste Zeile (Zeilen S = 1 und 6) und
(G) Addieren der untersten Zeile in die oberste Zeile, was 6M in der obersten Zeile ergibt; oder
(F') Duplizieren des 3M-Werts in die oberste Zeile und
(G') Verdoppeln der obersten Zeile in-situ;
(H) Einrichten des 1M-Werts in der untersten Zeile (S = 1); und
(I) Replizieren des Addier- und Verschiebeprozesses zur Multiplikation auf einer Anweisungstafel, die von der 632-Tafel getrennt ist, oder des Subtrahier- und Verschiebeprozesses zur Division unter Verwendung der 632M-Tafel als die Vorlage zum Einrichten von Werten auf der Anweisungstafel.

## Revendications

1. Appareil pour fournir un enseignement pédagogique dans au moins une science parmi les mathématiques et les sciences quantifiables, l'appareil comprenant :
un tableau pédagogique formé d'une pluralité de plaques pédagogiques (27), chacune des plaques pédagogiques (27) ayant des emplacements pédagogiques de région de plateau prédéterminés (11) situés à l'intérieur d'une région de plateau d'emplacement pédagogique encadrée par des bords (14A, 15A, 16A) de deux canaux horizontaux et d'un canal vertical (14, 15, 16), et un emplacement pédagogique d'état de saturation prédéterminé (17) situé à l'extérieur de la région de plateau d'emplacement pédagogique ; et
des pièces pédagogiques (24) configurées pour être reçues sur les plaques pédagogiques (27) aux emplacements pédagogiques de région de plateau prédéterminés (11) et à l'emplacement pédagogique d'état de saturation prédéterminé (17).

2. Appareil selon la revendication 1, dans lequel l'emplacement pédagogique d'état de saturation prédéterminé (17) est situé à la jonction du canal horizontal supérieur (15) et du canal vertical (16).

3. Appareil selon la revendication 1, dans lequel les emplacements pédagogiques de région de plateau prédéterminés (11) sont agencés en une matrice zonée trois par trois.

4. Appareil selon l'une des revendications précédentes, dans lequel chaque plaque pédagogique (27) a un bord et dans lequel les bords des plaques pédagogiques adjacentes (27) sont contigus pour former le tableau pédagogique.

5. Appareil selon l'une des revendications précédentes, dans lequel lesdits deux canaux horizontaux (14, 15) et ledit canal vertical (16) fournissent des chemins de glissement de pièce pédagogique.

6. Appareil selon l'une quelconque des revendications précédentes, dans lequel l'emplacement pédagogique d'état de saturation prédéterminé (17) est situé à l'extérieur de la région de plateau d'emplacement pédagogique, dans le coin supérieur gauche.

7. Appareil selon l'une quelconque des revendications précédentes, dans lequel les emplacements pédagogiques de région de plateau prédéterminés (11) et l'emplacement pédagogique d'état de saturation prédéterminé (17) sont encastrés dans la plaque pédagogique (27).

8. Appareil selon l'une quelconque des revendications précédentes, dans lequel les emplacements pédagogiques de région de plateau prédéterminés (11) et l'emplacement pédagogique d'état de saturation prédéterminé (17) portent des repères imprimés (10).

9. Appareil selon l'une quelconque des revendications précédentes, dans lequel la pluralité de plaques pédagogiques (27) sont assemblées en un pavage unifié.

10. Appareil selon l'une quelconque des revendications précédentes, dans lequel la pluralité de plaques pédagogiques (27) ont au moins un bord, et dans lequel les bords des plaques pédagogiques adjacentes (27) sont en butée les uns contre les autres et sont contigus pour former un pavage qui définit le tableau pédagogique.

11. Appareil selon l'une quelconque des revendications précédentes, comprenant au moins un pochoir (30-39) présentant une ouverture ou une découpe facultative (40-49), où le pochoir est un moyen pour appliquer la configuration du nombre correct de pièces pédagogiques spécifiques au pochoir et du motif correct de pièces pédagogiques.

12. Appareil selon l'une quelconque des revendications précédentes, comprenant une pluralité de pochoirs (39-39), où chacun des pochoirs a une ouverture ou une découpe (40-49) qui permet à un emplacement pédagogique sous-jacent des emplacements pédagogiques de région de plateau prédéterminés (11) ou à un emplacement pédagogique sous-jacent des emplacements pédagogiques d'état de saturation prédéterminés (17) d'être visible à travers l'ouverture ou la découpe (40-49) lorsque le pochoir (30-39) est positionné sur la plaque pédagogique (27).

13. Procédé pour fournir un enseignement pédagogique dans au moins une science parmi les mathématiques et les sciences quantifiables, le procédé comprenant les étapes suivantes :
fournir un appareil selon l'une quelconque des revendications précédentes ; et
manipuler les pièces pédagogiques (24) aux emplacements pédagogiques de région de plateau prédéterminés (11) et à l'emplacement pédagogique d'état de saturation prédéterminé (17) dans un ordre prédéterminé afin d'effectuer une opération de changement d'état relative à l'au moins une science parmi les mathématiques et les sciences quantifiables.

14. Procédé selon la revendication 13, dans lequel les pièces pédagogiques sont placées sur les emplacements pédagogiques de région de plateau prédéterminés (11) de gauche à droite et dans des rangées ascendantes.

15. Procédé selon la revendication 13 ou la revendication 14 pour effectuer une multiplication 632M ou une division 632M, où M désigne une valeur de multiplicande ou de diviseur pour la multiplication 632M ou la division 632M, le procédé comprenant les étapes suivantes :
mettre en place un tableau pédagogique, appelé tableau 632M, comprenant une colonne de quatre plaques pédagogiques pour des valeurs S, et une colonne attenante de quatre rangées de plaques pédagogiques, un rang de la colonne des quatre rangées étant supérieur d'une unité à la valeur M, le procédé étant suivi des étapes suivantes:
(A) établir une série de valeurs S égales à 6, 3, 2, 1 de la rangée supérieure vers la rangée inférieure dans la colonne des valeurs S du tableau 632M ;
(B) établir la valeur 1M dans la colonne adjacente à la fois dans la rangée inférieure, la rangée immédiatement supérieure et la rangée supérieure ;
(C) additionner la rangée inférieure à la rangée immédiatement supérieure, ce qui donne 2M dans la rangée S=2 ;
(D) dupliquer la valeur 2M dans la rangée située au-dessus (rangée S=3) ;
(E) additionner la rangée supérieure (S=6) vers le bas à la rangée située en dessous, ce qui donne 3M dans la rangée S=3 ;
(F) dupliquer la valeur 3M dans la rangée supérieure et dans la rangée inférieure (rangées S=1 et S=6), et
(G) additionner la rangée inférieure à la rangée supérieure, ce qui donne 6M dans la rangée supérieure ; ou
(F') dupliquer la valeur 3M dans la rangée supérieure, et
(G') doubler sur place la valeur de la rangée supérieure ;
(H) établir la valeur 1M dans la rangée inférieure (S=1) ; et
(I) reproduire, sur un tableau pédagogique distinct du tableau 632M, le procédé d'addition-décalage pour la multiplication ou le procédé de soustraction-décalage pour la division, en utilisant le tableau 632M comme gabarit pour la mise en place des valeurs sur le tableau pédagogique.
